# EUROPEAN PATENT APPLICATION

(11) **EP 2 460 862 A1**
(43) Date of publication of application: **06.06.2012**
(21) Application number: 12157210.1
(22) Date of filing: 08.05.2008
(51) Int. Cl.: C09J 7/00, C09J 7/02

(54) **Battery label**

(30) Priority: 10.05.2007 US 924371 P
(62) Divisional of application: 08761647.0
(71) Applicant: UPM Raflatac Oy, 33310 Tampere (FI)
(72) Inventor: Mitchell, Noel, 42111 Wuppertal (DE)
(74) Representative: Pursiainen, Timo Pekka

(57) **Abstract**

The present invention relates to a battery label (2) comprising an oriented face film (5) having a front side and a rear side, and an adhesive layer (6) on the rear side of the face film (5). The adhesive layer (6) comprises pressure sensitive adhesive and the face film (5) comprises cyclic olefin copolymer. The present invention also relates to a battery.

## Description

### Field of the invention

The present invention relates to a battery label and a battery comprising a body and a battery label.

### Prior Art

Monoaxially oriented rigid polyvinyl chloride (PVC) films are extremely suitable for the production of pressure sensitive battery labels. However, due to the nature of PVC, those films are regarded as environmentally risky because there are problems associated to the disposal of the PVC films.

Attempts to replace PVC have taken place in the past. Especially polypropylene has been a concern. However, those attempts have failed because the material has been technically unsuitable for the intended purpose. The reason for this have been the high shrink tensions of polypropylene compared to those of PVC. These high shrink tensions tend to cause wrinkles around the lip of the battery after shrinking.

W02004090059A, referred to in the international search report, discusses multilayered transparent biaxially oriented polypropylene (BOPP) packaging films with cold sealing adhesive coating applied on their outer surface. Such films are intended for packaging temperature-sensitive products and therefore cold sealing layers are used, which stick together at room temperature under only pressure. Evidently, these films do not bear suitable properties required to produce a battery label which is to be heat shrinked especially around the ends of the battery to produce neat rounded and tightly fitting edge lips over the ends of the battery.

EP0406642A, referred to in the international search report, describes again biaxially oriented polypropylene (BOPP) films which contain further natural and synthetic resins in order to increase the mechanical strength of such films. A biproduct of adding such resins to BOPP films is that the shrinkage of the films in the machine direction remains in the range of 2 % to 7 % at 120° C temperature as indicated in said document, for example, in the tables provided in columns 4 and 5. It is clear for a person skilled in the art that such shrinkage performance is far too low to be used as a battery label. Currently used PVC-labels, for example, have a shrinkage of more than 40 % in the machine direction when measured at 95°C.

Therefore, the prior art discussed above does not provide springboard alone or in combination for a person skilled in the art to develope battery label films, which needs to have both suitably low shrink tensions to prevent wrinkling of the film around the lip of the battery after the shrinking process, but also to have sufficiently high shrinkage capability during the heating to produce tightly fitting lips over the battery ends.

### Description of the Invention

The invention described in this application solves the above-mentioned problems. The novel films do not contain any chlorine or other halogen atoms and therefore, the disposal of these films does not harm the environment. The novel films are readily compatible with other polyolefin products.

The novel films have low shrink tensions so that they do not wrinkle at the lip of the battery after the shrinking process is completed.

The above-mentioned benefits are achieved by using a monoaxially or biaxially oriented polyolefin film containing cyclic olefin copolymers (COC).

Cyclic olefin copolymers are amorphous polymers that represent a new class of polymers when compared to well-known and traditional polypropylenes or polyethylenes.

The current invention proposes heat shrinkable or locally heat shrinkable battery labels to be manufactured based on these materials which can provide very significant benefits especially in such applications.

The COC family, in contrast to the partially crystalline polyolefins PE and PP, consists of amorphous, transparent copolymers based on cyclic olefins and linear olefins.

Cyclic olefin copolymers are a new class of polymeric materials with property profiles which can be varied over a wide range during polymerization. These new materials exhibit a unique combination of properties which can be customized by varying the chemical structure of the copolymer. Performance benefits include:
· Low density
· High transparency
· Low birefringence
· Extremely low water absorption
· Excellent water vapour barrier properties
· Variable heat deflection temperature up to 170 °C
· High rigidity, strength and hardness
· Very good resistance to acids and alkalis
· Very good electrical insulating properties
· Very good melt processability/flowability

These COC-containing polyolefin films could be based on either PP or PE resins. Preferably they are based on polyethylene resins, particularly on LLDPE resins. The LLDPE resins are preferable due to their very low shrink tensions. The films could be either mono-layer or multi-layer films, however multi-layer films are preferred because they can be tailored one layer at a time in order to give specific properties to each layer.

The films could be either produced by cast-extrusion or blown-film production processes.

A battery label is a label which is wrapped around a battery so that the opposite edges of the label may overlap slightly. The label extends over the end of the battery in the longitudinal direction of the battery so that excess material extends over both ends of the battery. After the label is wrapped around the battery, the label is treated at an elevated temperature (usually 95°C to 135°C, by using e.g. steam, hot air, or infra red radiation) so that the label shrinks in the direction of the circumference of the battery. Another option is that both ends of the label are treated locally at elevated temperature (typically hot air at between 200 and 300°C) so that the both ends of the label shrink in the direction of the circumference of the battery. Due to the local shrinking, those parts of the label which extend over the ends of the battery, bend over the ends of the battery, thus forming a neat edge (lip) for the battery.

The label comprises a face film and an adhesive layer on the rear side of the face material. The face film may consist of one homogenous layer, or it may comprise several layers. The face film or one of its layers may comprise 1 to 99 wt.-% COC, and rest of the plastic material may e.g. linear low density polyethylene, low density polyethylene, high density polyethylene, or polypropylene. Typically the face film is a co-extruded multilayer film. The thickness of the face film may range from 30 to 60 µm. The film may be monoaxilly oriented or biaxially oriented so that it is able to shrink back at elevated temperatures. If the film is biaxially oriented the orientation may be different in the longitudinal direction of the film compared to the orientation in the cross-direction of the film. The label is attached to the body of the battery so that the monoaxial orientation direction of the face film is transverse to the longitudinal direction of the battery, or if the film is biaxially oriented the orientation direction is chosen as desired. The adhesive layer on the rear side of the label may be formed of an acrylic adhesive, and usually it is a pressure sensitive adhesive.

If the face film is a multilayer film the composition of the plastic material in each layer can be tailored. For example, one layer may comprise a small amount of COC, and another layer may comprise a large amount of COC. The small amount of COC is typically 1 to 40 wt.-% of the total amount of the plastic material in said layer. The large amount of COC is typically 60 to 99 wt.-% of the total amount of the plastic material in said layer. The rest of the plastic material in those blend layers may be another suitable polyolefin, such as polyethylene or polypropylene. Suitable polyethylenes are, for example, LDPE (low density polyethylene) and LLDPE (linear low density polyethylene). The face film may also comprise layers which have been made of one single plastic material, such as COC or LLDPE. It is to be noted that each layer may contain other substances in addition to the plastic material. Common such substances are e.g. additives or fillers.

The front side of the face film can be printed or metallised in order to form images or printing on the surface of the battery. The face film may be covered with an overlay film which protects the images or printing on the surface of the face film. The overlay film may be made of the same material as the face film, or it may be made of a material whose shrinkage properties are essentially the same or less as those of the face film. It is also possible that the images or printing are protected by a varnish which is applied on the face film after it has been printed.

As already said above, the face film comprises alpha-olefin/cyclic-olefin copolymer (COC) which will be described below. COC is a copolymer that may be formed by polymerization of cyclic-olefin and alpha-olefin. A cyclic olefin is a compound containing a polymerizable carbon-carbon double bond that is either within an alicyclic ring (e.g., as in norbornene) or is linked to an alicyclic ring (e.g., as in vinyl cyclohexane). The COC may have a cyclic ring as part of the polymer backbone (e.g., ethylene/cyclopentene copolymer and ethylene/norbornene copolymer). The COC may have a cyclic ring pendant to the polymer backbone (e.g., ethylene/vinyl cyclohexane copolymer).

Exemplary COC may comprise (polymerized) cyclic-olefin content derived from one or more of cyclopentene, substituted cyclopentene, norbornene, substituted norbornene, cyclobutene, cyclopentene, methylcyclopentene, 5-vinylnorbornene, 5-methylnorbornene, 5-ethylidenorbornene, dicyclopentadiene, tetracyclododecene, and cyclododecatriene.

Useful COC may comprise cyclic-olefin content, such as any of those cyclic olefins identified above, of at least about, and/or at most about any of the following mole %: 10, 15, 18, 20, 22, 24, 28, 30, 32, 35, 40, 45, 50, 55, 60 and 65. Any range between these numbers is also possible. The above-mentioned ranges may be applied, for example, to exemplary cyclic olefin copolymers mentioned below.

Useful alpha-olefin of the COC may be linear or branched, and may have, for example, at least and/or at most any of the following number of carbon atoms: 2, 3, 4, 6, 8, 10, 14, 18, and 20. For example, the COC may comprise alpha-olefin content derived from one or more of ethylene and propylene. Useful COC may comprise alpha-olefin content (e.g., any of one or more of the above described alpha-olefins) in at least about, and/or at most about, any of the following mole %: 90, 85, 80, 75, 70, 65, 60, and 55. Any range between these numbers is also possible. The above-mentioned ranges may be applied, for example, to exemplary cyclic olefin copolymers mentioned below.

Exemplary COC includes ethylene/cyclic-olefin copolymer and propylene/cyclic-olefin copolymer. Useful COC includes ethylene/norbornene copolymer, ethylene/norbornene/octene copolymer, ethylene/norborne/butene copolymer, ethylene/norbornene/hexene copolymer, and propylene/norbornene copolymer.

The alpha-olefin/cyclic-olefin copolymer may be homogeneous or it may be heterogeneous.

### Detailed Description of the Invention

In the following, the invention will be described by referring to figures in which
Fig. 1 shows the chemical structure of COC,
Fig. 2a shows a battery during the manufacture,
Fig. 2b shows the battery when finished,
Fig. 3 shows a cross-sectional view of a web comprising labels of the invention, and
Fig. 4 shows a cross-sectional view of the face film of the label.

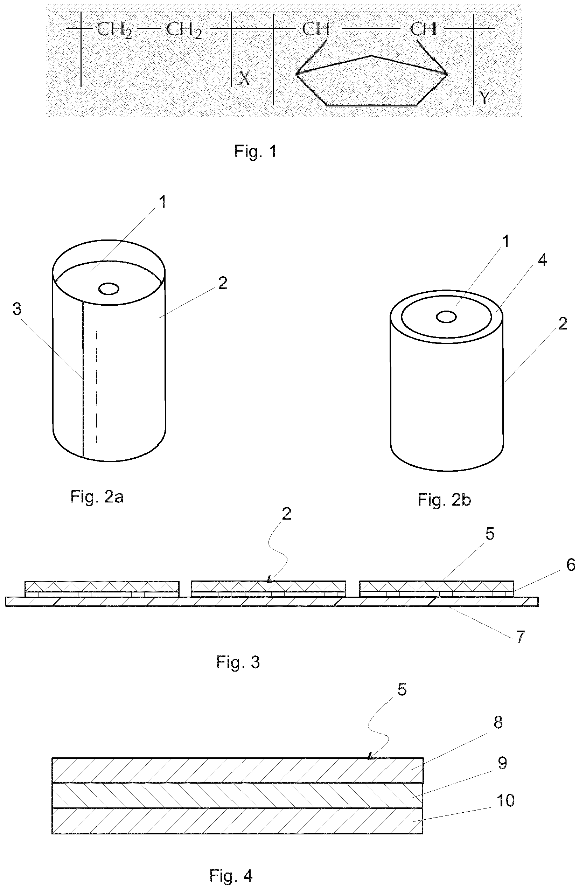

Figs. 2a and 2b show cylindrical batteries but it is obvious that the invention can be applied to batteries having different shapes.

Fig. 2a shows a body 1 around which a label 2 is wrapped. The edge 3 of the label may overlap the opposite edge slightly. The label extends over the edges (lips) of the battery in the longitudinal direction of the body 1. In Fig. 2b the label has been bent over the edge 4 of the body 1 so that a finished battery has been formed.

Fig. 3 shows a web comprising battery labels 2. The battery label comprises a face film 5 and an adhesive layer 6. Underneath the labels 2 there is a release surface, such as a release paper 7, or a release film.

Fig. 4 shows a cross-sectional view of the face film 5. Typically the face film 5 is a co-extruded multilayer film which comprises COC in its one or more layers. The following non-restrictive examples present some typical multilayer coextruded films:

### Example 1.

A multilayer film comprises three layers. The first layer 8 comprises high concentration of COC and LLDPE. The composition of the plastic material of the first layer may consist of 60 to 99 wt.-% COC and 1 to 40 wt.-% LLDPE. The second layer 9 comprises LLDPE and optionally a small amount of COC. The composition of the plastic material of the second layer may consist of 1 to 40 wt.-% COC and 60 to 99 wt.-% LLDPE. However, it is possible that there is no COC at all. The third layer 10 comprises high concentration of COC and LLDPE. The amounts of COC and LLDPE in the third layer 10 may be the same as in the first layer 8. The film may be monoaxially or biaxially oriented.

### Example 2.

A multilayer film comprises three layers. The first layer 8 comprises LLDPE and a small amount of COC. The composition of the plastic material of the first layer may consist of 1 to 40 wt.-% COC and 60 to 99 wt.-% LLDPE. However, it is possible that there is no COC at all. The second layer 9 comprises LLDPE and high concentration of COC. The composition of the plastic material of the second layer may consist of 60 to 99 wt.-% COC and 1 to 40 wt.-% LLDPE. The third layer 10 comprises a small amount of COC and LLDPE. The amounts of COC and LLDPE in the third layer 10 may be the same as in the first layer 8. The film may be monoaxially or biaxially oriented.

### Example 3.

A multilayer film comprises three layers. The first layer 8 and the third layer 10 comprise LLDPE. The second layer 9 comprises COC. The plastic material in each layer is pure LLDPE, or pure COC. The film may be monoaxially or biaxially oriented.

### Example 4.

A multilayer film comprises three layers. The first layer 8 and the third layer 10 comprise COC. The second layer 9 comprises LLDPE. The plastic material in each layer is pure LLDPE, or pure COC. The film may be monoaxially or biaxially oriented.

## Claims

1. A battery label (2) comprising an oriented face film (5) having a front side and a rear side, and a pressure sensitive adhesive layer (6) on the rear side of the face film (5) for attaching the label on circumference of the battery, **characterized in that** the face film (5) comprises cyclic olefin copolymer.

2. The battery label according to claim 1, **characterized in that** the face film (5) comprises a blend of cyclic olefin copolymer and one or more of the following polymers: linear low density polyethylene, low density polyethylene, high density polyethylene, and polypropylene.

3. The battery label according to claim 1 or 2, **characterized in that** the face film (5) is a multilayer film.

4. The battery label according to claim 3, **characterized in that** the plastic material composition of one layer of the multilayer film comprises 1 to 40 wt.-% cyclic olefin copolymer.

5. The battery label according to claim 3, **characterized in that** the plastic material composition of one layer of the multilayer film comprises 60 to 99 wt.-% cyclic olefin copolymer.

6. The battery label according to claim 3, **characterized in that** the plastic material composition of one layer of the multilayer film consists of cyclic olefin copolymer.

7. The battery label according to any preceding claim, **characterized in that** the face film is monoaxially orientated.

8. A battery comprising a body (1) with circumference and a battery label (2) which is wrapped around the circumference of the body (1), the battery label comprising an oriented face film (5) having a front side and a rear side, and a pressure sensitive adhesive layer (6) on the rear side of the face film for attaching the label on circumference of the battery, **characterized in that** the face film (5) comprises cyclic olefin copolymer.

9. The battery according to claim 8, **characterized in that** the face film (5) comprises a blend of cyclic olefin copolymer and one or more of the following polymers: linear low density polyethylene, low density polyethylene, high density polyethylene, and polypropylene.

10. The battery according to claim 8 or 9, **characterized in that** the face film (5) is a multilayer film.

11. The battery according to claim 10, **characterized in that** the plastic material composition of one layer of the multilayer film comprises 1 to 40 wt.-% cyclic olefin copolymer.

12. The battery according to claim 10, **characterized in that** the plastic material composition of one layer of the multilayer film comprises 60 to 99 wt.-% cyclic olefin copolymer.

13. The battery according to claim 10, **characterized in that** the plastic material composition of one layer of the multilayer film consists of cyclic olefin copolymer.

14. The battery according to any preceding claim 8 to 13, **characterized in that** the face film is monoaxially orientated.

15. A use of cyclic olefin copolymer in a battery label (2).
